# EUROPEAN PATENT APPLICATION

(11) **EP 3 358 341 A1**
(43) Date of publication of application: **08.08.2018**
(21) Application number: 16851884.3
(22) Date of filing: 30.09.2016
(51) Int. Cl.: G01N 23/18, G01N 23/04, G01N 27/72

(54) **FOREIGN-MATTER INSPECTION DEVICE AND FOREIGN-MATTER INSPECTION SYSTEM**

(30) Priority: 01.10.2015 JP 2015195911
(71) Applicant: Ishida Co., Ltd., Kyoto-shi, Kyoto 606-8392 (JP); Nissin Electronics Co., Ltd., Tokyo 136-0071 (JP)
(72) Inventor: YAEGASHI Takuya, Hakodate-shi Hokkaido 041-0834 (JP); TANAKA Ryo, Hakodate-shi Hokkaido 041-0834 (JP)
(74) Representative: Global IP Europe Patentanwaltskanzlei
(86) International application number: PCT/JP2016/079096
(87) International publication number: WO 2017/057715

(57) **Abstract**

A foreign-matter inspection device includes a transporting unit transporting an object to be inspected, an X-ray inspection unit detecting a foreign matter included in the object transported by the transporting unit by using permeability of X-rays, a metal detection unit detecting a foreign matter included in the object transported by the transporting unit by using an interaction between a magnetic field and a metal, a housing accommodating the X-ray inspection unit, the metal detection unit, and at least a part of the transporting unit therein, and a data management unit storing result data of the X-ray inspection unit and result data of the metal detection unit in a storage unit in association with each other.

## Description

### Technical Field

The present disclosure relates to a foreign-matter inspection device and a foreign-matter inspection system.

### Background Art

Patent Literature 1 discloses a foreign-matter inspection device capable of performing both X-ray inspection for detecting a foreign matter included in an object to be inspected by using the permeability of X-rays and metal detection for detecting a foreign matter included in the object by using an interaction between a magnetic field and a metal.

### Citation List

### Patent Literature

Patent Literature 1: Japanese Unexamined Patent Publication No. 2015-28465

### Summary of Invention

### Technical Problem

The foreign-matter inspection device disclosed in Patent Literature 1 has a high level of foreign matter detection accuracy because a non-metallic foreign matter hardly detected by the metal detection is detected by the X-ray inspection and a low-density foreign matter hardly detected by the X-ray inspection is detected by the metal detection. In the foreign-matter inspection device disclosed in Patent Literature 1, however, data utilization such as using result data of one to adjust setting of the other such as a detection threshold cannot be performed.

An object of the present disclosure is to provide a foreign-matter inspection device and a foreign-matter inspection system allowing result data of X-ray inspection and result data of metal detection to be used in association with each other.

### Solution to Problem

A foreign-matter inspection device according to one form of the present disclosure includes a transporting unit configured to transport an object to be inspected; an X-ray inspection unit configured to detect, by using permeability of X-rays, a foreign matter included in the object being transported by the transporting unit; a metal detection unit configured to detect, by using an interaction between a magnetic field and a metal, a foreign matter included in the object being transported by the transporting unit; a housing accommodating the X-ray inspection unit, the metal detection unit, and at least a part of the transporting unit therein; and a data management unit configured to store result data of the X-ray inspection unit and result data of the metal detection unit in a storage unit in association with each other.

In the foreign-matter inspection device, the result data of the X-ray inspection unit and the result data of the metal detection unit are stored in the storage unit in association with each other by the data management unit. Accordingly, the result data of X-ray inspection and the result data of metal detection can be used in association with each other.

In the foreign-matter inspection device according to the form of the present disclosure, the data management unit may be configured to associate the result data of the X-ray inspection unit and the result data of the metal detection unit with each other by using inspection time of the X-ray inspection unit and detection time of the metal detection unit. The result data of the X-ray inspection unit and the result data of the metal detection unit with respect to the same object to be inspected can be associated with each other by the inspection time being used.

In the foreign-matter inspection device according to the form of the present disclosure, the data management unit may be configured to store the result data of the X-ray inspection unit and the result data of the metal detection unit in the storage unit in association with each other in a case where the foreign matter has been detected by the X-ray inspection unit or the metal detection unit. In a case where one of the X-ray inspection unit and the metal detection unit has detected the foreign matter in this case, both result data can be stored in association with each other even in a case where the other does not detect the foreign matter. Accordingly, the setting and so on of inspection during which the foreign matter was not detected despite the presence of the foreign matter can be verified afterwards.

A foreign-matter inspection system according to another form of the present disclosure includes a transporting unit configured to transport an object to be inspected; an X-ray inspection unit configured to detect, by using permeability of X-rays, a foreign matter included in the object being transported by the transporting unit; a metal detection unit configured to detect, by using an interaction between a magnetic field and a metal, a foreign matter included in the object being transported by the transporting unit; a storage unit; and a data management unit configured to store result data of the X-ray inspection unit and result data of the metal detection unit in the storage unit in association with each other.

The foreign-matter inspection system has the same effect as the foreign-matter inspection device described above.

### Advantageous Effects of Invention

According to the present disclosure, the result data of the X-ray inspection and the result data of the metal detection can be used in association with each other.

### Brief Description of Drawings

FIG. 1 is a front view of a foreign-matter inspection device according to an embodiment.
FIG. 2 is a conceptual diagram illustrating a control system and the internal configuration of the foreign-matter inspection device illustrated in FIG. 1.
FIG. 3 is an explanatory diagram of the main configurations of an X-ray inspection unit and a metal detection unit illustrated in FIG. 2.
FIG. 4 is a perspective view of the main configurations of the X-ray inspection unit and the metal detection unit illustrated in FIG. 2.
FIG. 5 is a functional block diagram relating to an example of data management in the foreign-matter inspection device illustrated in FIG. 1.
FIG. 6 is the example of the data management in the foreign-matter inspection device illustrated in FIG. 1.
FIG. 7 is a flowchart illustrating an example of data management processing in the foreign-matter inspection device illustrated in FIG. 1.
FIG. 8 is a functional block diagram of a foreign-matter inspection system according to an embodiment.

### Description of Embodiments

Hereinafter, an embodiment of the present disclosure will be described with reference to accompanying drawings. In the following description, the same reference numerals will be used to refer to the same or equivalent elements so that duplicate description is omitted.

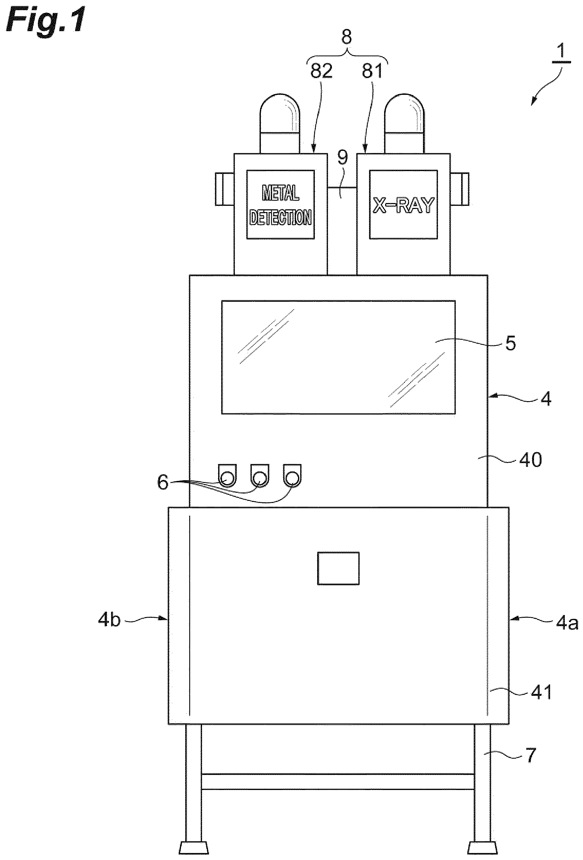

FIG. 1 is a front view of a foreign-matter inspection device 1 according to the embodiment. The foreign-matter inspection device 1 illustrated in FIG. 1 is a device detecting a foreign matter included in an object to be inspected. The object is, for example, food. The foreign-matter inspection device 1 inspects whether or not the foreign matter is included in the object by performing X-ray inspection and metal detection while transporting the object therein.

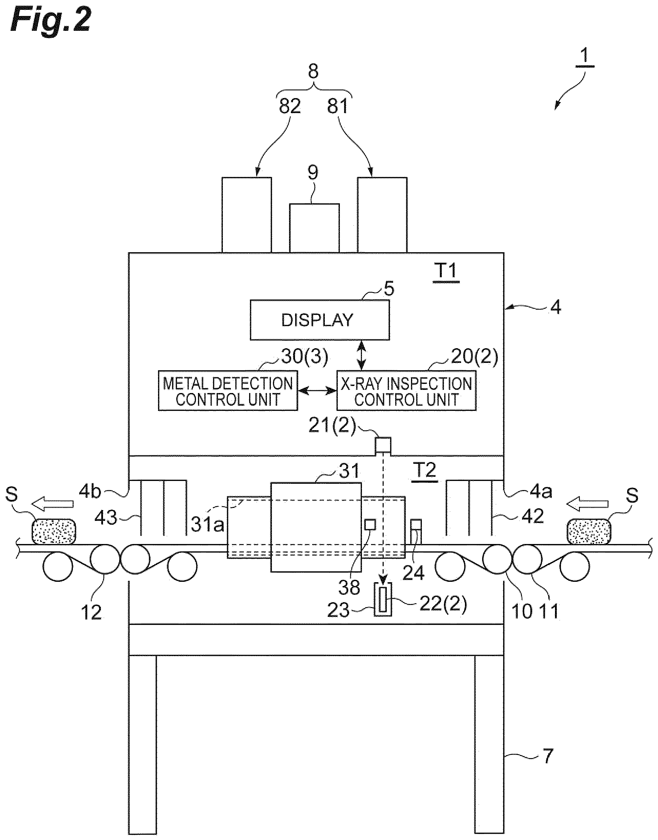

The X-ray inspection is a method for detecting the foreign matter included in the object by using the permeability of X-rays and is realized by an X-ray inspection unit 2 (refer to FIG. 2). During the X-ray inspection, the foreign matter different in X-ray permeability from the object can be detected. The metal detection is a method for detecting the foreign matter included in the object by using an interaction between a magnetic field and a metal and is realized by a metal detection unit 3 (refer to FIG. 2). During the metal detection, a metallic foreign matter can be detected. The X-ray inspection unit 2 and the metal detection unit 3 will be described in detail later.

The foreign-matter inspection device 1 has a housing 4 in which a space is defined. The X-ray inspection unit 2 and the metal detection unit 3 are accommodated in the housing 4. The housing 4 shields the X-rays that are generated by the X-ray inspection unit 2 and keeps the X-rays from leaking outside. The housing 4 is formed of, for example, stainless steel.

In the present embodiment, the housing 4 has a box shape. An opening portion 4a communicating with the inside of the housing 4 is formed in the left side surface of the housing 4. Likewise, an opening portion 4b communicating with the inside of the housing 4 is formed in the right side surface of the housing 4. In the present embodiment, the inspection is performed after the object is carried into the housing 4 from the opening portion 4a, and then the object is carried to the outside of the housing 4 from the opening portion 4b. In other words, the opening portion 4a is an inlet for the object and the opening portion 4b is an outlet for the object.

An upper door 40 and a lower door 41 opening and closing the housing 4 are disposed on the front surface of the housing 4. The upper door 40 and the lower door 41 are, for example, open door structures. At least a part of the X-ray inspection unit 2 and the metal detection unit 3 (described later) is exposed to the outside by the upper door 40 or the lower door 41 being opened and closed. The upper door 40 and the lower door 41 are formed of, for example, stainless steel.

A display 5 and operation switches 6 are disposed on the front surface of the upper door 40. The display 5 is a display device that has both a display function and an input function and is, for example, a touch panel. The display 5 displays the results of the X-ray inspection and the metal detection and so on and displays an operation screen for setting of various parameters relating to the metal detection and the X-ray inspection. The operation switches 6 are, for example, power switches for the X-ray inspection unit 2 and the metal detection unit 3.

The housing 4 is supported by a support base 7. A notification unit 8 and a cooler 9 are disposed on the upper surface of the housing 4. The notification unit 8 provides notifications on foreign matter contamination and the operation state of equipment. The notification unit 8 is provided with a first alarm 81 corresponding to the X-ray inspection unit 2 and a second alarm 82 corresponding to the metal detection unit 3. The cooler 9 adjusts the temperature of the equipment disposed in the housing 4 by sending cold air into the housing 4.

FIG. 2 is a conceptual diagram illustrating a control system and the internal configuration of the foreign-matter inspection device 1 illustrated in FIG. 1. As illustrated in FIG. 2, the inside of the housing 4 is partitioned into a substrate chamber T1 where a part of an X-ray generator (described later), a component control substrate, and so on are disposed and an inspection chamber T2 where the inspection is performed after an object to be inspected S is carried thereinto. The temperature of the substrate chamber T1 is adjusted by the cooler 9 described above.

A conveyor (transporting unit) 10 transporting the object S is disposed in the inspection chamber T2. In the present embodiment, the conveyor 10 is a roller-type belt conveyor and extends in a horizontal direction inside the housing 4 in a state where one end portion is positioned in the opening portion 4a and the other end portion is positioned in the opening portion 4b. In other words, the part of the conveyor 10 except for the end portions is accommodated in the housing 4. The conveyor 10 according to the present embodiment carries the object S into the housing 4 via the opening portion 4a and carries the object S to the outside of the housing 4 via the opening portion 4b.

An X-ray shielding curtain 42 is disposed in the opening portion 4a. Likewise, an X-ray shielding curtain 43 is disposed in the opening portion 4b. The upper ends of the X-ray shielding curtains 42 and 43 are fixed ends with respect to the housing 4 and the lower ends of the X-ray shielding curtains 42 and 43 are free ends. The X-ray shielding curtains 42 and 43 shield the X-rays that are generated by the X-ray inspection unit 2 and keep the X-rays from leaking outside. The X-ray shielding curtains 42 and 43 are formed of, for example, a flexible material containing tungsten. A carry-in conveyor 11 may be disposed on the right side of the conveyor 10 and a carry-out conveyor 12 may be disposed on the left side of the conveyor 10 so that the object S is automatically carried in and out. In addition, the carry-out conveyor 12 may be provided with a distribution function for the object S.

A case 31 that has an annular body is disposed in the inspection chamber T2, and a through hole 31a is formed in the case 31 so that the object S passes therethrough. The conveyor 10 penetrates the case 31 via the through hole 31a. The object S is allowed to pass through the through hole 31a of the case 31 by the conveyor 10 and the X-ray inspection and the metal detection are sequentially executed in the case 31. The case 31 is formed of, for example, stainless steel.

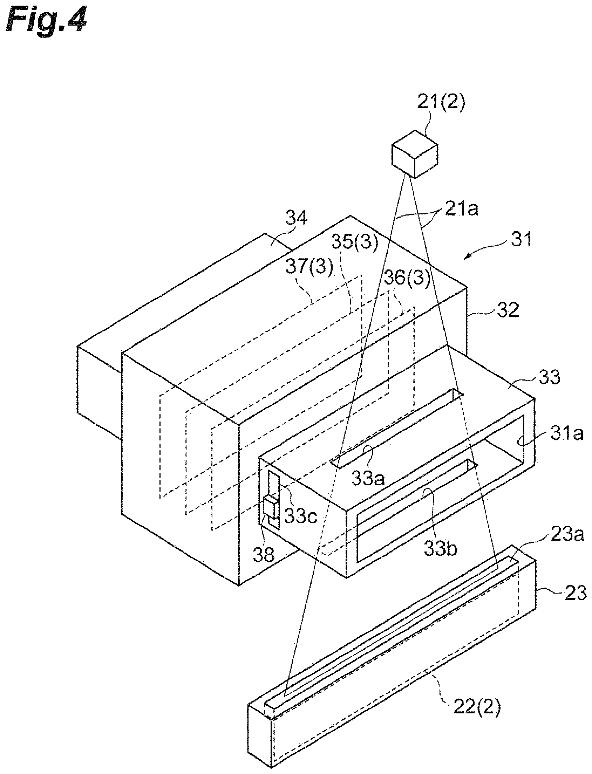

The X-ray inspection unit 2 performing the X-ray inspection will be described first. The X-ray inspection unit 2 is provided with an X-ray inspection control unit 20, an X-ray generator 21, and an X-ray detector 22. The X-ray generator 21 includes an X-ray source generating X-rays and a slit mechanism. The X-ray detector 22 detects the X-rays generated by the X-ray generator 21. The X-ray generator 21 and the X-ray detector 22 are disposed to face each other to sandwich the conveyor 10 and the case 31 from an up-down direction. The X-ray source and so on of the X-ray generator 21 are disposed in the substrate chamber T1 and an X-ray emission mechanism of the X-ray generator 21 is disposed in the inspection chamber T2. A line sensor in which a plurality of X-ray detection sensors is arranged side by side along a front-rear direction is used as an example of the X-ray detector 22. The X-ray detector 22 is accommodated in a substrate case 23 so that X-ray leakage is reduced. A slit 23a (refer to FIG. 4) is formed in the substrate case 23 so that X-rays reach the X-ray detector 22.

The X-ray inspection control unit 20 has an input-output interface I/O performing signal input and output with respect to the outside and so on, a read-only memory (ROM) storing, for example, a program and information for performing processing, a random access memory (RAM) temporarily storing data, a storage medium such as a hard disk drive (HDD), a central processing unit (CPU), a communication circuit, and so on. The X-ray inspection control unit 20 realizes the following function by storing input data in the RAM based on a signal output by the CPU, loading the program stored in the ROM into the RAM, and executing the program loaded into the RAM.

The X-ray inspection control unit 20 is disposed in the substrate chamber T1 and connected to the X-ray generator 21 and the X-ray detector 22. The X-ray inspection control unit 20 is connected to the display 5 and receives operation information from an operator via the operation screen. The X-ray inspection control unit 20 sets the operation profiles of the X-ray generator 21 and the X-ray detector 22 based on the operation information and controls the operations of the X-ray generator 21 and the X-ray detector 22. The X-ray inspection control unit 20 initiates the inspection of the object S in a case where the object S is detected by a laser sensor 24 disposed upstream of the X-ray generator 21 and the X-ray detector 22 being used. The X-ray inspection control unit 20 irradiates the object S transported by the conveyor 10 with X-rays by controlling the X-ray generator 21. The X-ray detector 22 measures the X-ray permeation amount of the X-rays permeating the object S and outputs the measured X-ray permeation amount to the X-ray inspection control unit 20.

The X-ray inspection control unit 20 generates an X-ray permeation image in which the X-ray permeation amount acquired in chronological order is reflected in a pixel value. Then, the X-ray inspection control unit 20 detects the foreign matter by analyzing the X-ray permeation image with image processing technology. For example, the X-ray inspection control unit 20 determines, based on the pixel value of the X-ray permeation image, whether or not an image region is present where the difference of the object S from a reference permeation rate is equal to or greater than a predetermined value. The X-ray inspection control unit 20 determines that the foreign matter has been detected in a case where the image region is present where the difference of the object S from the reference permeation rate is equal to or greater than the predetermined value.

The X-ray inspection control unit 20 displays X-ray inspection result data on the display 5 or stores the result data in a storage unit in response to a request from the operator. In addition, the X-ray inspection control unit 20 provides the operator with a notification to the effect that the equipment relating to the X-ray inspection is in operation by using the first alarm 81 in a case where the X-ray generator 21 and the X-ray detector 22 are normally operated. Furthermore, the X-ray inspection control unit 20 provides the operator with a notification to the effect that the foreign matter has been detected by using the first alarm 81 in a case where the X-ray inspection control unit 20 determines that the foreign matter has been detected.

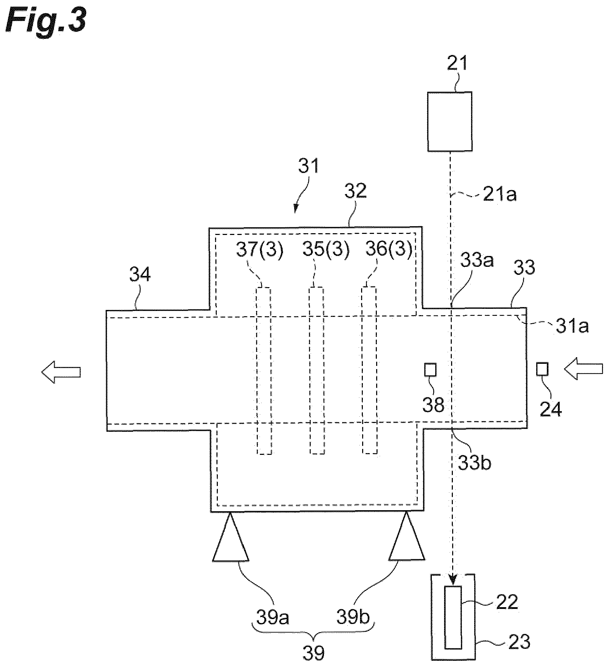

FIG. 3 is an explanatory diagram of the main configurations of the X-ray inspection unit 2 and the metal detection unit 3 illustrated in FIG. 2. FIG. 4 is a perspective view of the main configurations of the X-ray inspection unit 2 and the metal detection unit 3 illustrated in FIG. 2. As illustrated in FIGS. 3 and 4, the case 31 has a main body portion 32, a first hood portion 33, and a second hood portion 34. The first hood portion 33 is disposed on the opening portion 4a side (inlet side) with respect to the main body portion 32. The second hood portion 34 is disposed on the opening portion 4b side (outlet side) with respect to the main body portion 32. The through hole 31a of the case 31 described above is defined by the inner wall of each of the main body portion 32, the first hood portion 33, and the second hood portion 34.

On the upper surface of the first hood portion 33, an X-ray passing slit 33a allowing X-rays to pass is formed to be positioned below the X-ray generator 21. Beneath the lower surface of the first hood portion 33, an X-ray passing slit 33b allowing X-rays to pass is formed to face the X-ray passing slit 33a. The X-ray detector 22 is disposed below the X-ray passing slit 33b. As a result of this configuration, an X-ray 21a generated by the X-ray generator 21 passes through the X-ray passing slits 33a and 33b and is emitted to the object S transported in the case 31. In a side surface of the first hood portion 33, a slit 33c is formed downstream of the X-ray passing slits 33a and 33b (on the main body portion 32 side). A laser sensor 38 is disposed in the slit 33c. The laser sensor 38 irradiates the object S on the conveyor 10 with laser via the slit 33c.

The metal detection unit 3 performing the metal detection will be described below. The metal detection unit 3 is provided with a metal detection control unit 30, an annular transmission coil 35 as a search coil, and annular receiving coils 36 and 37 as search coils. The transmission coil 35 and the receiving coils 36 and 37 are formed of a conductive material such as a metal and disposed inside the main body portion 32 of the case 31. The transmission coil 35 and the receiving coils 36 and 37 are disposed coaxially with the extension direction of the through hole 31a. In other words, the transmission coil 35 and the receiving coils 36 and 37 are disposed to surround the through hole 31a. As a result, the object S is allowed to pass through the transmission coil 35 and the receiving coils 36 and 37 by the conveyor 10.

The transmission coil 35 is disposed between the receiving coils 36 and 37. The receiving coils 36 and 37 are differentially connected to each other and are disposed symmetrically to the transmission coil 35. The two receiving coils 36 and 37 have the same flux linkage. The transmission coil 35 is configured to be energizable and generates a magnetic flux. Each of the receiving coils 36 and 37 is excited with a voltage by the electromagnetic induction of the magnetic field that is generated by the transmission coil 35. The first hood portion 33 and the second hood portion 34 provide shielding to keep the magnetic field generated by the transmission coil 35 from leaking outside and an external magnetic field from entering.

The metal detection control unit 30 has an input-output interface I/O performing signal input and output with respect to the outside and so on, a ROM storing, for example, a program and information for performing processing, a RAM temporarily storing data, a storage medium such as a HDD, a CPU, a communication circuit, and so on. The metal detection control unit 30 realizes the following function by storing input data in the RAM based on a signal output by the CPU, loading the program stored in the ROM into the RAM, and executing the program loaded into the RAM.

The metal detection control unit 30 is disposed in the substrate chamber T1, is connected to the X-ray inspection control unit 20, and receives the operation information from the operator input to the operation screen of the display 5 via the X-ray inspection control unit 20. The metal detection control unit 30 sets the operation profiles of the transmission coil 35 and the receiving coils 36 and 37 based on the operation information. The metal detection control unit 30 initiates the metal detection for the object S in a case where the object S is detected by the laser sensor 38 disposed upstream of the transmission coil 35 and the receiving coils 36 and 37 being used.

The metal detection control unit 30 generates the magnetic flux by supplying an alternating excitation current to the transmission coil 35. The magnetic flux generated by the transmission coil 35 penetrates the two receiving coils 36 and 37 and each of the receiving coils 36 and 37 is excited with a voltage by the electromagnetic induction. The metal detection control unit 30 acquires the output voltage of the differential connection of the receiving coils 36 and 37 and performs metal detection determination. When the output voltage of the differential connection is 0, the metal detection control unit 30 determines that the metallic foreign matter is yet to be detected. When the output voltage of the differential connection is not 0, the metal detection control unit 30 determines that the metallic foreign matter has been detected.

The metal detection control unit 30 displays metal detection result data on the display 5 or stores the result data in a storage unit in response to a request from the operator. In addition, the metal detection control unit 30 provides the operator with a notification to the effect that the equipment relating to the metal detection is in operation by using the second alarm 82 in a case where the transmission coil 35 and the receiving coils 36 and 37 are normally operated. Furthermore, the metal detection control unit 30 provides the operator with a notification to the effect that the foreign matter has been detected by using the second alarm 82 in a case where the metal detection control unit 30 determines that the foreign matter has been detected. The case 31 may also be held by a vibration isolator 39 (vibration isolators 39a and 39b) for the purpose of improving vibration resistance characteristics.

The X-ray inspection unit 2 and the metal detection unit 3 described above are configured to be operable independently of each other. In other words, the foreign-matter inspection device 1 is capable of not only performing both the X-ray inspection and the metal detection but also executing either the X-ray inspection or the metal detection. In the present embodiment, the X-ray inspection unit 2 performs the display control for the display 5 as described above, and thus the operation screen of the metal detection unit 3 is not displayed on the display 5 in a case where the X-ray inspection unit 2 is stopped. Accordingly, a sub display (not illustrated) connected to the metal detection unit 3 is disposed inside the housing 4. In a case where the X-ray inspection unit 2 is stopped, the metal detection unit 3 receives the operation information via the sub display and displays the result data and the like on the sub display.

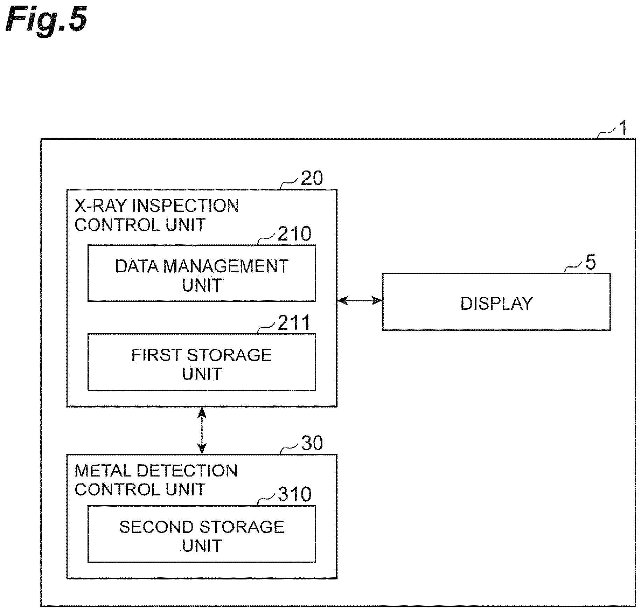

Data management in the foreign-matter inspection device 1 will be described below. FIG. 5 is a functional block diagram relating to an example of the data management in the foreign-matter inspection device 1 illustrated in FIG. 1. As illustrated in FIG. 5, the X-ray inspection control unit 20 is provided with a first storage unit 211 (example of the storage unit). In addition, the metal detection control unit 30 is provided with a second storage unit 310. The first storage unit 211 and the second storage unit 310 are nonvolatile storage mediums retaining storage even in a case where power is turned OFF and are, for example, flash memories or HDDs.

Basic data management by the X-ray inspection control unit 20 will be described first. The X-ray inspection control unit 20 stores the X-ray inspection result data in the first storage unit 211. The X-ray inspection result data is information acquired during the X-ray inspection. The X-ray inspection result data is, for example, information used for the foreign matter determination during the X-ray inspection. A more specific example of the X-ray inspection result data is the X-ray permeation image in which the X-ray permeation amount is reflected in the pixel value, a processed image obtained by processing of the X-ray permeation image, or the like.

The X-ray inspection control unit 20 may also store the X-ray inspection result data and the inspection time of the X-ray inspection unit 2 in the first storage unit 211 in association with each other. The inspection time of the X-ray inspection unit 2 may be, for example, the time when the object S is detected by the laser sensor 24 being used or the time when the inspection or the generation of the result data is completed. The X-ray inspection control unit 20 acquires the time by, for example, the clock function of the real-time clock of the X-ray inspection control unit 20.

The X-ray inspection control unit 20 may also store the X-ray inspection result data and an X-ray inspection result in the first storage unit 211 in association with each other. The X-ray inspection result is, for example, a determination result indicating whether or not the foreign matter has been detected. The X-ray inspection result is, for example, "OK" information indicating that the foreign matter has not been detected or "NG" information indicating that the foreign matter has been detected.

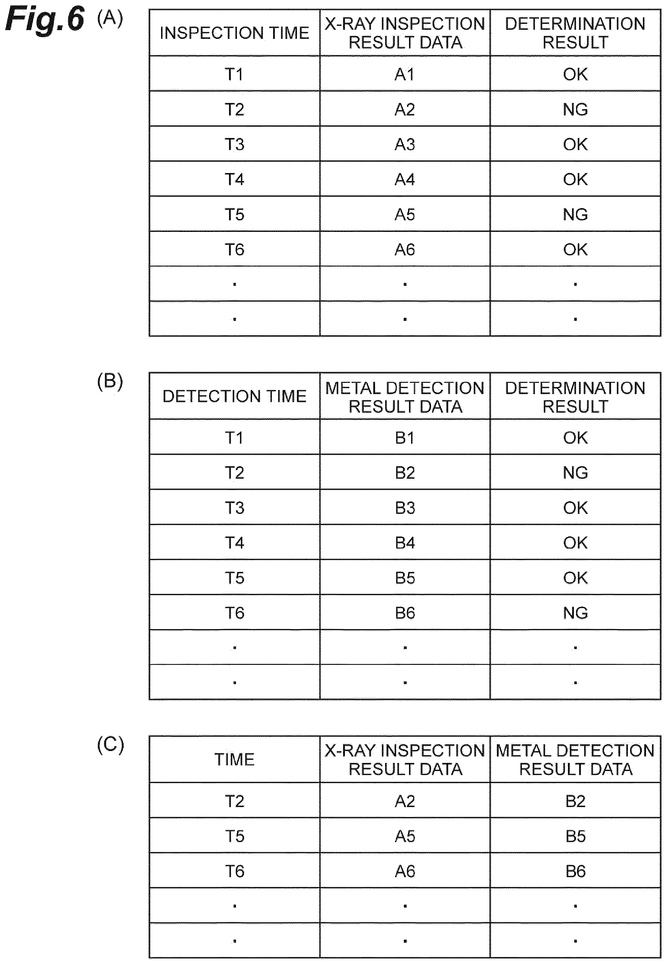

FIG. 6 is the example of the data management in the foreign-matter inspection device 1 illustrated in FIG. 1. An Example (A) of FIG. 6 is an example of the data management by the X-ray inspection control unit 20. As illustrated in the example (A) of FIG. 6, the X-ray inspection control unit 20 manages the inspection time, the X-ray inspection result data, and the determination result in the form of a table. For example, the X-ray inspection result data "A1" is associated with the inspection time "T1" and the determination result "OK". For example, the X-ray inspection result data "A2" is associated with the inspection time "T2" and the determination result "NG".

The X-ray inspection control unit 20 may also store the X-ray inspection result data and X-ray inspection setting information in the first storage unit 211 in association with each other. The X-ray inspection setting information is information set automatically or by the operator for the X-ray inspection to be performed. Examples of the X-ray inspection setting information include an X-ray output value, an X-ray image processing parameter, and a foreign matter detection threshold. The X-ray image processing parameter is, for example, a parameter of an image filter converting the X-ray permeation amount into the pixel value. The foreign matter detection threshold is, for example, a decision threshold regarding foreign matter determination depending on the degree of the difference of the object S from a reference permeation rate.

Furthermore, the X-ray inspection control unit 20 may temporarily store the X-ray inspection result data in the ROM or the like and store the X-ray inspection result data in the first storage unit 211 when a data storage condition is satisfied. The data storage condition is a reference for determining the necessity of result data storage. An example of the data storage condition is a case where the foreign matter has been detected (case where the inspection result is "NG"). Alternatively, the data storage condition may be a case where a storage instruction from the operator has been received via the operation screen of the display 5 or a case where the storage capacity of the first storage unit 211 has become equal to or less than a threshold. Since the X-ray inspection result data is an image, the capacity of the first storage unit 211 may be exceeded in a case where the X-ray inspection result data is stored unlimitedly. The X-ray inspection control unit 20 is capable of effectively utilizing the capacity of the first storage unit 211 or maintaining the capacity at an appropriate value by performing the data management by using the data storage condition.

Basic data management by the metal detection control unit 30 will be described below. The metal detection control unit 30 stores the metal detection result data in the second storage unit 310. The metal detection result data is information acquired during the metal detection. The metal detection result data is, for example, information used for the metallic foreign matter determination during the metal detection. More specific examples of the metal detection result data include a graph of the output voltage of the differential connection and the peak value of the output voltage.

The metal detection control unit 30 may also store the metal detection result data and the detection time of the metal detection unit 3 in the second storage unit 310 in association with each other. The detection time of the metal detection unit 3 may be, for example, the time when the object S is detected by the laser sensor 38 being used or the time when the detection or the generation of the result data is completed. The metal detection control unit 30 acquires the time by, for example, the clock function of the real-time clock of the metal detection control unit 30.

The metal detection control unit 30 may also store the metal detection result data and a metal detection result in the second storage unit 310 in association with each other. The metal detection result is, for example, a determination result indicating whether or not the metallic foreign matter has been detected. The metal detection result is, for example, "OK" information indicating that the metallic foreign matter has not been detected or "NG" information indicating that the metallic foreign matter has been detected.

An example (B) of FIG. 6 is an example of the data management by the metal detection control unit 30. As illustrated in the example (B) of FIG. 6, the metal detection control unit 30 manages the inspection time, the metal detection result data, and the determination result in the form of a table. For example, the metal detection result data "B1" is associated with the detection time "T1" and the determination result "OK". For example, the metal detection result data "B2" is associated with the inspection time "T2" and the determination result "NG".

The metal detection control unit 30 may also store the metal detection result data and metal detection setting information in the second storage unit 310 in association with each other. The metal detection setting information is information set automatically or by the operator for the metal detection to be performed. Examples of the metal detection setting information include an alternating excitation current value and a metallic foreign matter detection threshold. The metallic foreign matter detection threshold is, for example, a decision threshold regarding foreign matter determination depending on the degree of the difference between the excitation voltages of the two receiving coils 36 and 37. The threshold is set to 0 in a case where, for example, the foreign matter is detected when the output voltage of the differential connection is 0.

Furthermore, the metal detection control unit 30 may temporarily store the metal detection result data in the ROM or the like and store the metal detection result data in the second storage unit 310 when a data storage condition is satisfied. The data storage condition is the same as the content described with regard to the X-ray inspection control unit 20. The data storage condition of the metal detection control unit 30 may also differ from the data storage condition of the X-ray inspection control unit 20.

Data management for mutually utilizing the X-ray inspection result data and the metal detection result data in the foreign-matter inspection device 1 will be described below. As described above, the X-ray inspection control unit 20 and the metal detection control unit 30 are capable of performing bidirectional communication. A data management unit 210 of the X-ray inspection control unit 20 acquires information relating to the metal detection from the metal detection control unit 30 and associates both result data with each other. The timing when the information relating to the metal detection is acquired may be the timing when the metal detection is performed or may be a predetermined timing following the metal detection. The predetermined timing is, for example, the timing when a predetermined time has elapsed or the timing immediately preceding device power OFF.

The data management unit 210 associates the result data of the X-ray inspection unit 2 and the result data of the metal detection unit 3 with each other by using the inspection time of the X-ray inspection unit 2 and the detection time of the metal detection unit 3. For example, the data management unit 210 associates the result data of the X-ray inspection unit 2 and the result data of the metal detection unit 3 with each other in a case where the inspection time of the X-ray inspection unit 2 and the detection time of the metal detection unit 3 are within a predetermined time range. The predetermined time range is determined by the execution time difference between the X-ray inspection and the metal detection with respect to the same object S being used. Specifically, the predetermined time range is determined depending on the positions where the X-ray inspection and the metal detection are performed and the transport speed of the conveyor 10. In the following description, the execution timings of the X-ray inspection and the metal detection with respect to the same object S will be assumed to have no time difference at all so that the description can be easily understood.

The data management unit 210 stores the result data of the X-ray inspection unit 2 and the result data of the metal detection unit 3 in the first storage unit 211 in association with each other. The data management unit 210 may store only the correlation between both (for example, only an identifier capable of identifying the data) or may store both result data together as a single piece of data in the first storage unit 211.

In a case where the identifier is used, the data management unit 210 acquires the identifier capable of identifying the metal detection result data from the metal detection control unit 30. Then, the data management unit 210 stores the acquired metal detection identifier and an X-ray inspection result data identifier in association with each other. In a case where both result data are handled as a single piece of data, the data management unit 210 acquires the metal detection result data from the metal detection control unit 30. Then, the data management unit 210 stores the acquired metal detection result data and the X-ray inspection result data together as a single piece of data.

The data management unit 210 may also store the result data of the X-ray inspection unit 2 and the result data of the metal detection unit 3 in the first storage unit 211 in association with each other only in a case where a related condition is satisfied. The related condition is a condition for determining whether or not the data management unit 210 will associate both result data with each other. Examples of the case where the related condition is satisfied include a case where the X-ray inspection unit 2 or the metal detection unit 3 has detected the foreign matter and a case where an association instruction from the operator has been received via the operation screen of the display 5.

An example (C) of FIG. 6 is an example of the data management by the data management unit 210. As illustrated in the example (C) of FIG. 6, the data management unit 210 stores the result data of the X-ray inspection unit 2 and the result data of the metal detection unit 3 in association with each other only in a case where the X-ray inspection unit 2 or the metal detection unit 3 has detected the foreign matter. For example, the determination result of the X-ray inspection data "A1" of the inspection time "T1" is "OK" and the determination result of the metal detection data "B1" of the detection time "T1" is "OK". In this case, the data management unit 210 does not associate the X-ray inspection data "A1" and the metal detection data "B1" with each other. For example, the determination result of the X-ray inspection data "A2" of the inspection time "T2" is "NG" and the determination result of the metal detection data "B2" of the detection time "T2" is "NG". In this case, the data management unit 210 associates the X-ray inspection data "A2" and the metal detection data "B2" with each other. For example, the determination result of the X-ray inspection data "A5" of the inspection time "T5" is "NG" and the determination result of the metal detection data "B5" of the detection time "T5" is "OK". In this case, the data management unit 210 associates the X-ray inspection data "A5" and the metal detection data "B5" with each other. The data management unit 210 may associate the result data of the X-ray inspection unit 2 and the result data of the metal detection unit 3 with each other in this manner only in a case where the X-ray inspection unit 2 or the metal detection unit 3 has detected the foreign matter.

In addition, the data management unit 210 may protect only the X-ray inspection result data and the metal detection result data illustrated in t he example (C) of FIG. 6 and delete the other data (result data in which both determination results are "OK"). The data management unit 210 may also delete the result data in which both determination results are "OK" in a case where, for example, a predetermined time has elapsed since data generation.

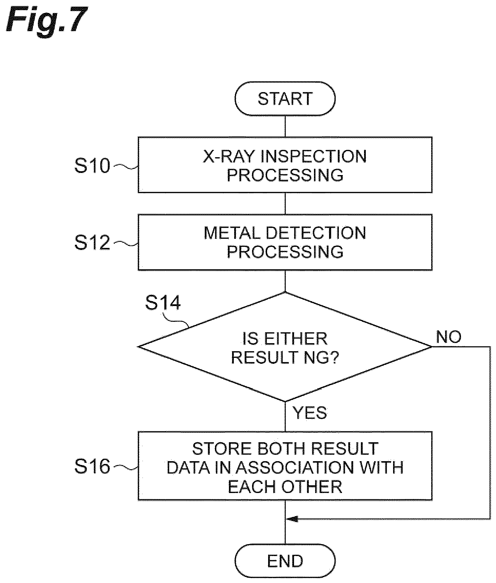

An example of data management processing in the foreign-matter inspection device 1 will be described below. FIG. 7 is a flowchart illustrating the example of the data management processing in the foreign-matter inspection device 1 illustrated in FIG. 1. The flowchart illustrated in FIG. 7 is executed at, for example, a power ON timing of the foreign-matter inspection device 1. Described with reference to FIG. 7 is an example in which the X-ray inspection unit 2 and the metal detection unit 3 save the result data in temporary storage mediums and the result data is saved in the nonvolatile storage mediums only in a case where the data management unit 210 determines that storage is necessary.

Firstly, the X-ray inspection unit 2 of the foreign-matter inspection device 1 performs X-ray inspection processing (S10). As the X-ray inspection processing (S10), the X-ray inspection unit 2 irradiates the object S with X-rays, acquires the X-ray permeation image and the inspection time, temporarily stores the X-ray permeation image and the inspection time in the ROM or the like, and performs the foreign matter determination by performing image processing.

Next, the metal detection unit 3 of the foreign-matter inspection device 1 performs metal detection processing (S12). As the metal detection processing (S12), the metal detection unit 3 acquires the output voltage of the differential connection and the detection time at a time when the object S passes through the search coil, temporarily stores the output voltage of the differential connection and the detection time in the ROM or the like, and performs the foreign matter determination.

Next, the data management unit 210 of the foreign-matter inspection device 1 performs related condition determination processing (S14). As the related condition determination processing (S14), the data management unit 210 identifies the determination result of the X-ray inspection and the determination result of the metal detection with respect to the same object S based on the inspection time and the detection time. Then, the data management unit 210 determines whether or not either the determination result of the X-ray inspection or the determination result of the metal detection has "NG".

In a case where it is determined in the related condition determination processing (S14) that either one of the two determination results has "NG", the data management unit 210 performs storage processing (S16). As the storage processing (S16), the data management unit 210 stores both result data in the first storage unit 211 in association with each other.

In a case where it is not determined in the related condition determination processing (S14) that either one of the two determination results has "NG", that is, in a case where both determination results are "OK", the data management unit 210 terminates the processing illustrated in FIG. 7 without data association.

As a result of the execution of the flowchart illustrated in FIG. 7, both result data are associated with each other and stored in the first storage unit 211 in a case where either one of the determination result of the X-ray inspection and the determination result of the metal detection has "NG".

In the foreign-matter inspection device 1 according to the present embodiment, the result data of the X-ray inspection unit 2 and the result data of the metal detection unit 3 are associated with each other and stored in the first storage unit 211 by the data management unit 210 as described above. Accordingly, the result data of the X-ray inspection and the result data of the metal detection can be used in association with each other.

In addition, in the foreign-matter inspection device 1 according to the present embodiment, the data management unit 210 is capable of storing the result data of the X-ray inspection unit 2 and the result data of the metal detection unit 3 in the first storage unit 211 in association with each other in a case where the X-ray inspection unit 2 or the metal detection unit 3 has detected the foreign matter. In a case where one of the X-ray inspection unit 2 and the metal detection unit 3 has detected the foreign matter in this case, both result data can be stored in association with each other even in a case where the other does not detect the foreign matter. Accordingly, the setting and so on of inspection during which the foreign matter was not detected despite the presence of the foreign matter can be verified afterwards. For example, setting information regarding the inspection during which the foreign matter was not detected can be reviewed in a case where the result data and the setting information are also associated and stored. Furthermore, pressure on the capacity of the storage unit storing the result data can be avoided.

Although one embodiment of the present disclosure has been described above, one form of the present disclosure is not limited to the embodiment described above.

Although an example in which the data management unit 210 is provided in the X-ray inspection control unit 20 has been described in the above embodiment, the data management unit 210 may also be provided in the metal detection control unit 30. In this case, the data management unit 210 may acquire information from the X-ray inspection control unit 20 and store both data in the second storage unit 310 in association with each other. In addition, the data management unit 210 may be prepared as a control substrate other than the X-ray inspection control unit 20 and the metal detection control unit 30.

In addition, the first storage unit 211 and the second storage unit 310 are not limited to those provided in the foreign-matter inspection device 1 and may also be, for example, memories or external HDDs externally connected to the foreign-matter inspection device 1.

Although an example in which the object S is transported from the opening portion 4a to the opening portion 4b has been described in the above embodiment, the transport direction may be reversed. In this case, the laser sensor 24 may be disposed between the opening portion 4b and the second hood portion 34 and the laser sensor 38 may be disposed in a slit formed in a side surface of the second hood portion 34.

Although an example in which a part of the conveyor 10 is disposed in the housing 4 has been described in the above embodiment, the conveyor 10 as a whole may also be accommodated in the housing 4.

Although an example in which the determination results of the X-ray inspection unit 2 and the metal detection unit 3 are "OK" or "NG" has been described in the above embodiment, image data or the like may also be included in the determination results.

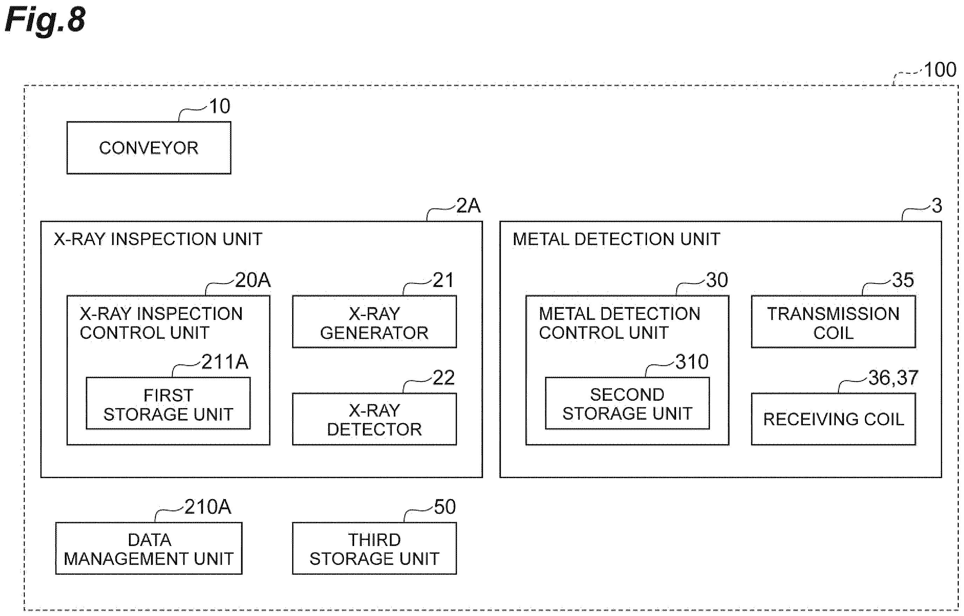

The foreign-matter inspection device 1 may also be configured as a system in which some of the components are physically separated. FIG. 8 is a functional block diagram of a foreign-matter inspection system 100 according to an embodiment. The foreign-matter inspection system 100 is provided with components corresponding to the foreign-matter inspection device 1. The foreign-matter inspection system 100 differs from the foreign-matter inspection device 1 only in that each of the X-ray inspection unit 2, the metal detection unit 3, and the data management unit 210 is physically separated and a third storage unit 50 (example of the storage unit) is provided. In other words, the foreign-matter inspection system 100 and the foreign-matter inspection device 1 differ from each other only in terms of the number of storage units and component disposition. The following description will focus on the differences from the foreign-matter inspection device 1 so that duplicate description is omitted.

The foreign-matter inspection system 100 is provided with the conveyor 10, an X-ray inspection unit 2A, the metal detection unit 3, a data management unit 210A, and the third storage unit 50. The X-ray inspection unit 2A is physically separated from the metal detection unit 3. For example, two housings identical in configuration to the housing 4 are disposed with respect to the conveyor 10, the X-ray inspection unit 2A is accommodated in a first housing, and the metal detection unit 3 is accommodated in a second housing.

The X-ray inspection unit 2A is provided with an X-ray inspection control unit 20A that has a first storage unit 211A, the X-ray generator 21, and the X-ray detector 22. The X-ray inspection control unit 20A, the X-ray generator 21, and the X-ray detector 22 are accommodated in, for example, the first housing described above. The metal detection unit 3 is provided with the metal detection control unit 30 that has the second storage unit 310, the transmission coil 35, and the receiving coils 36 and 37. The metal detection control unit 30, the transmission coil 35, and the receiving coils 36 and 37 are accommodated in, for example, the second housing described above.

The data management unit 210A and the third storage unit 50 are physically separated from the X-ray inspection unit 2A and the metal detection unit 3. In other words, the data management unit 210A and the third storage unit 50 are disposed outside the first housing and the second housing. The X-ray inspection unit 2A, the metal detection unit 3, the data management unit 210A and the third storage unit 50 are interconnected via communication. The third storage unit 50 is a nonvolatile storage medium retaining storage even in a case where power is turned OFF and is, for example, a flash memory or a HDD.

In the foreign-matter inspection device 1, the X-ray inspection result is stored in the first storage unit 211 and the metal inspection result is stored in the second storage unit 310. Then, the data relating to the association between the result data of the X-ray inspection unit 2A and the result data of the metal detection unit 3 is stored in the first storage unit 211 by the data management unit 210. In the foreign-matter inspection system 100, in contrast, the data relating to the association is stored in the third storage unit 50 by the data management unit 210A. In other words, in the foreign-matter inspection system 100, the component relating to the data association function of the foreign-matter inspection device 1 is disposed outside the foreign-matter inspection device 1. The other configurations and functions of the foreign-matter inspection system 100 are identical to those of the foreign-matter inspection device 1.

The foreign-matter inspection system 100 described above has the same effect as the foreign-matter inspection device 1. The foreign-matter inspection system 100 is capable of having not only a form in which all of the X-ray inspection unit 2A, the metal detection unit 3, the data management unit 210A, and the third storage unit 50 are separated but also a form in which some of the functions of the foreign-matter inspection device 1 are provided outside the device. In addition, every modification example relating to the data management in the foreign-matter inspection device 1 described above can be applied to the foreign-matter inspection system 100.

### Reference Signs List

1: Foreign-matter inspection device, 2: X-ray inspection unit, 3: Meta I detection unit, 4: Housing, 5: Display, 8: Notification unit, 10: Conveyor, 20: X-ray inspection control unit, 30: Metal detection control unit, 210: Data man agement unit, 211: First storage unit, 310: Second storage unit.

## Claims

1. A foreign-matter inspection device comprising:
a transporting unit configured to transport an object to be inspected;
an X-ray inspection unit configured to detect, by using permeability of X-rays, a foreign matter included in the object being transported by the transporting unit;
a metal detection unit configured to detect, by using an interaction between a magnetic field and a metal, a foreign matter included in the object being transported by the transporting unit;
a housing accommodating the X-ray inspection unit, the metal detection unit, and at least a part of the transporting unit therein; and
a data management unit configured to store result data of the X-ray inspection unit and result data of the metal detection unit in a storage unit in association with each other.

2. The foreign-matter inspection device according to claim 1, wherein
the data management unit is configured to associate the result data of the X-ray inspection unit and the result data of the metal detection unit with each other by using inspection time of the X-ray inspection unit and detection time of the metal detection unit.

3. The foreign-matter inspection device according to claim 1 or 2, wherein
the data management unit is configured to store the result data of the X-ray inspection unit and the result data of the metal detection unit in the storage unit in association with each other in a case where the foreign matter has been detected by the X-ray inspection unit or the metal detection unit.

4. A foreign-matter inspection system comprising:
a transporting unit configured to transport an object to be inspected;
an X-ray inspection unit configured to detect, by using permeability of X-rays, a foreign matter included in the object being transported by the transporting unit;
a metal detection unit configured to detect, by using an interaction between a magnetic field and a metal, a foreign matter included in the object being transported by the transporting unit;
a storage unit; and
a data management unit configured to store result data of the X-ray inspection unit and result data of the metal detection unit in the storage unit in association with each other.
